# EUROPÄISCHE PATENTSCHRIFT

(11) **EP 4 128 101 B1**
(45) Veröffentlichungstag und Bekanntmachung des Hinweises auf die Patenterteilung: **01.04.2026**
(21) Anmeldenummer: 21715162.0
(22) Anmeldetag: 22.03.2021
(51) Int. Cl.: G06Q 10/08

(54) **VERFAHREN ZUR POSITIONSERFASSUNG EINES MOBILEN, AUSTAUSCHBAREN, DURCH EIN NUTZFAHRZEUG TRANSPORTIERBAREN LADUNGSTRÄGERS**
METHOD FOR SENSING THE POSITION OF A MOBILE, EXCHANGEABLE LOAD CARRIER WHICH CAN BE TRANSPORTED BY MEANS OF A UTILITY VEHICLE
PROCÉDÉ DE DÉTECTION DE POSITION D'UN PORTEUR DE CHARGE MOBILE ÉCHANGEABLE, POUVANT ÊTRE TRANSPORTÉ PAR UN VÉHICULE UTILITAIRE

(30) Priorität: 23.03.2020 DE 102020107934
(43) Veröffentlichungstag der Anmeldung: 08.02.2023
(73) Patentinhaber: ZF CV Systems Global GmbH, 3006 Bern (CH)
(72) Erfinder: MEYER-RÖSSLER, Philip, 31180 Giesen (DE); RICKE, Janik, 31311 Uetze (DE)
(74) Vertreter: Rabe, Dirk-Heinrich
(86) Internationale Anmeldenummer: PCT/EP2021/057173
(87) Internationale Veröffentlichungsnummer: WO 2021/191098

(56) Entgegenhaltungen:
- WO-A2-2007/095088
- US-A1- 2006 202 817
- US-A1- 2009 088 924
- US-A1- 2015 349 977
- US-A1- 2017 254 694
- US-B1- 9 631 969
- US-B2- 6 921 100

## Beschreibung

Die Erfindung betrifft ein Verfahren zur Positionserfassung eines mobilen, austauschbaren, durch ein Nutzfahrzeug transportierbaren Ladungsträgers, sowie ein Flottenmanagementsystem zur Durchführung eines derartigen Verfahrens.

Das Dokument US2006202817A1 offenbart den Oberbegriff von Anspruch 1.

Auf Betriebshöfen, insbesondere von Logistikunternehmen bzw. Speditionshöfen, wird im Allgemeinen eine Vielzahl von unterschiedlichen Anhängern, Aufliegern, Wechselbrücken und Umschlag-Containern zwischengeparkt, die zum Transport von Waren dienen. Derartige Anhänger, d.h. insbesondere Deichselanhänger und Sattelauflieger, sowie Wechselbrücken (Wechselbehälter) zur Aufnahme auf einem Nutzfahrzeug und Umschlag-Container, insbesondere Bauschuttcontainer oder Übersee-Container gemäß der entsprechenden Norm für Übersee-Container, werden nachfolgend als mobile, austauschbare, von einem Nutzfahrzeug transportierbare oder verstellbare Ladungsträger bezeichnet. Hierbei werden Wechselbrücken und Umschlag-Container (Bauschuttcontainer, Übersee-Container) direkt auf einem geeigneten Nutzfahrzeug aufgenommen; hierzu fährt ein entsprechendes Nutzfahrzeug unter eine angehobene Wechselbrücke, die nachfolgend von dem Nutzfahrzeug durch Anhebung seines Fahrwerks aufgenommen wird. Ein Umschlag- Container wird im Allgemeinen durch einen Kran oder eine andere Hebeeinrichtung auf ein geeignetes Nutzfahrzeug aufgesetzt. Deichselanhänger und Sattelauflieger werden direkt an geeignete Zugfahrzeuge angekoppelt und stellen eigene Anhänge-Fahrzeuge dar, die auch im Allgemeinen über ein eigenes Anhänger-Bremssystem verfügen.

Auf einem Betriebshof werden die unterschiedlichen Ladungsträger im Allgemeinen an geeigneten oder gerade zur Verfügung stehenden Abladestellen abgeladen bzw. zwischengeparkt. Wenn auf dem Betriebshof viele Waren umgeschlagen werden, und hierzu z. B. die verschiedenen Ladungsträger vorbeladen und zwischengeparkt werden, um die nachfolgenden Wartezeiten, insbesondere Be- und Entladezeiten, der Fahrer zu verkürzen, kann es aufwändig sein, den jeweiligen Ladungsträger auf dem Betriebshof wiederzufinden. Das Wiederfinden der Ladungsträger kann zu unübersichtlichen Situationen führen und für den Fahrer zeitaufwändig sein. Auch für die Instandhaltung und Administration kann das Wiederfinden aufwändig sein. Insbesondere bei beengten Platzverhältnissen können zudem Probleme auftreten, wenn Ladungsträger an unzugänglichen Orten abgeladen werden, so dass z. B. der Zugang zu zuerst abgestellten Ladungsträgern durch nachfolgende Ladungsträger erschwert oder beeinträchtigt wird. Hierdurch können gegebenenfalls nachfolgende Umstellvorgänge erforderlich sein, um die jeweiligen Ladungsträger wieder erreichbar zu machen.

Hierzu ist es bekannt, Ladungsträger mit GNSS (Global Navigation Satellite System, z.B. GPS)- Sendeeinrichtungen auszustatten, d. h. jeweils mit einem GNSS-Empfänger zum Empfangen von GNSS-Satelliten-Signalen und weiterhin Sendeeinrichtungen zum Aussenden entsprechender eindeutiger Identifikationssignale. Derartige Ausstattungen der Ladungsträger sind jedoch im Allgemeinen kostenintensiv und erfordern eine zusätzliche Stromversorgung. Auch ist ihre Anbringung gegebenenfalls an manchen Ladungsträgern problematisch.

Weiterhin sind Meldesysteme bekannt, bei denen der Fahrer beim Aufnehmen und Abstellen eines Ladungsträgers ein Positionsmeldesignal ausgeben soll, so dass die Position des abgestellten Ladungsträgers in einem Flottenmanagementsystem gespeichert wird. Ein derartiges System kann jedoch nur zuverlässig arbeiten, wenn das An- und Abkoppeln bzw. der Abladevorgang oder Aufnahmevorgang vom Fahrer auch zuverlässig gemeldet wird; zum Teil werden aber insbesondere Gespanne aus einem Nutzfahrzeug und einem Anhängerfahrzeug auf dem Betriebshof an einer Position zwischengeparkt, um sie nachfolgend an eine andere End-Position zu verfahren, ohne dass der Fahrer dies als neue Position meldet, wobei die Anhängerfahrzeuge nachfolgend an dieser Position verbleiben.

Der Erfindung liegt daher die Aufgabe zugrunde, ein Verfahren zur Positionserfassung eines mobilen, austauschbaren, durch ein Nutzfahrzeug verstellbaren oder transportierbaren Ladungsträgers zu schaffen, das eine sichere Positionserfassung mit relativ geringem Aufwand ermöglicht. Weiterhin soll ein Flottenmanagementsystem zur Durchführung eines derartigen Verfahrens bereitgestellt werden, d.h. insbesondere ein Flottenmanagementsystem hierzu befähigt und/oder erweitert werden.

Diese Aufgabe wird durch ein Verfahren und ein Flottenmanagementsystem nach den unabhängigen Ansprüchen gelöst. Die Unteransprüche beschreiben bevorzugte Weiterbildungen.

Somit werden Abladevorgänge und Aufnahmevorgänge als Melde- Ereignisse von dem Nutzfahrzeug erfasst. Als Abladevorgänge werden insbesondere das Abkuppeln eines Anhängers (Deichselanhängers, Sattelaufliegers) und das Abladen eines Umschlag-Containers bzw. das Abbrücken einer Wechselbrücke erfasst, und
entsprechend als Aufnahmevorgänge das Ankuppeln eines Anhängefahrzeugs, das Aufbrücken von Wechselbrücken sowie das Aufnehmen eines Umschlag-Containers.

Die Detektion der Melde-Ereignisse und Bildung der Positions-Meldesignale erfolgt über das Nutzfahrzeug bzw. Zugfahrzeug, das im Allgemeinen bereits in seinem Navigationssystem über ein GNSS verfügt und somit die Positionsdaten ohne zusätzlichen Aufwand aktuell ermitteln kann. Hierbei ermittelt das Nutzfahrzeug das Melde-Ereignis zum einen aus eigenen Informationssignalen aus Informationen seines pneumatischen Luftfedersystems, welches als ein elektronisches ECAS-System des Nutzfahrzeuges ausgebildet ist. Eine derartige Ermittlung der Melde-Ereignisse ist insbesondere bei Wechselbrücken und Umschlags-Containern vorteilhaft, da hier der Ladungsträger als zusätzliche Masse von dem Nutzfahrzeug aufgenommen wird und somit zu einer Zustands-Änderung im Nutzfahrzeug führt, d. h. insbesondere einer Niveauhöhen-Änderung bzw. Hubhöhenänderung beim Aufnehmen der entsprechenden Masse, und weiterhin auch einer Luftdruck-Änderung in den Luftfedern der Niveauregulierung. Derartige Messsignale stehen in elektronisch geregelten Luftfedersystemen im Allgemeinen bereits zur Verfügung, so dass hierfür keine weitere Sensorik erforderlich ist. Somit kann die Ermittlung eines Melde-Ereignisses im EBS des Nutzfahrzeugs durchgeführt werden, das hierzu gegebenenfalls zusätzlich auf Signale des ECAS-Systems zurückgreift.

Ein Abladevorgang oder Aufnahmevorgang kann insbesondere durch Einsatz von hierzu vorgesehenen definierten oder spezifizierten technischen Kupplungsmitteln erfolgen, d.h. z.B. ein Königszapfen an der Zugmaschine und Zapfenaufnahme an dem Sattelschlepper,
oder auch ein gelber und roter Kupplungskopf und/oder ein normierten elektronischer Anschluss wie z.B. CAN zwischen Zugfahrzeug und Anhängefahrzeug,
oder auch z.B. die Aufnahme eines ISO-Containers oder Schüttcontainers auf der Ladefläche in Container-Aufnahmen,
bzw. die normierte Aufnahme einer Wechselbrücke in einer Wechselbrückenaufnahme.

Das Erkennen eines Abladevorganges oder Aufnahmevorganges kann insbesondere auch erfolgen durch einen Vergleich von Messwerten mit vorbestimmten Kennlinien oder Tabellenwerten oder Auflade-/Ablade-Charakteristiken,
wobei hierzu gegebenenfalls auch eine Differenz der Messwerte zu den Tabellenwerten oder Auflade-/Ablade-Charakteristiken gebildet werden kann und die Differenz mit Schwellwerten hierzu verglichen werden kann, so dass hieraus ein Abladevorgang oder Aufnahmevorgang positiv festgestellt werden kann.

Als Nutzfahrzeug ist grundsätzlich jedes Fahrzeug, d.h. mit aktivem Antrieb oder auch passiv wie z.B. ein Anhängefahrzeug, zu verstehen, das entsprechend die Aufnahme eines Ladungsträgers ermöglicht, d.h. grundsätzlich: ein LKW zur direkten Aufnahme eines Ladungsträgers auf seiner Ladefläche, ein LKW zur Aufnahme einer Wechselbrücke, aber auch ein LKW als Zugfahrzeug zur Aufnahme eines Anhängefahrzeugs, d.h. insbesondere eine Sattelzugmaschine oder ein Deichselzug,
aber auch z.B. ein Traktor oder ein anderes, zur Aufnahme eines Ladungsträgers geeignetes Fahrzeug. Somit kann grundsätzlich auch ein PKW, der über eine Deichsel bzw. Anhängerkupplung einen Anhänger aufnimmt, in dieser Funktion ein Nutzfahrzeug sein.

Grundsätzlich kann gemäß einer Ausführungsform das Nutzfahrzeug auch ein Anhängefahrzeug sein, das somit einen Ladungsträger aufnimmt und nicht aktiv angetrieben ist, sondern von einem Zugfahrzeug gezogen wird.

Der mobile, austauschbare Ladungsträger ist vorzugsweise aus der nachfolgenden Gruppen gewählt:
Wechselbrücken zur Aufnahme auf dem Nutzfahrzeug,
Sattelauflieger zur Aufnahme, d.h. Anhängen, an ein als Sattelzugmaschine ausgebildetes Nutzfahrzeug,
Deichselanhänger und Drehschemel-Deichselanhänger zum Anhängen an ein als Deichsel-Zugfahrzeug ausgebildetes Nutzfahrzeug,
Container, insbesondere Iso-Container oder Überseecontainer oder Schuttcontainer, zur Aufnahme durch ein Container-Fahrzeug als Nutzfahrzeug.

Das Nutzfahrzeug bildet aus dem ermittelten Melde-Ereignis und aktuellen Positionsdaten, die es insbesondere aus einem globalen Positionssystem (GNSS), d.h. z.B. GPS, aber auch Galileo, GLONASS, Beidu, aktuell ermitteln kann, ein Positions-Meldesignal und übermittelt dieses an eine Kommunikations-Zentrale des Flottenmanagementsystems, die die aktuellen Positionsdaten der jeweiligen Ladungsträger in einer stetig aktualisierten Speichereinheit speichert und aktualisiert.

Somit ist es nicht mehr erforderlich, dass der Fahrer nach dem Abladevorgang oder Aufnahmevorgang aktiv ein entsprechendes Meldesignal ausgibt und übermittelt. Es wird vielmehr ein automatisiertes, selbsttätiges Erkennen eines Melde-Ereignisses geschaffen, das automatisiert bzw. selbsttätig übertragen wird, um die aktuellen Positionsdaten der verschiedenen Ladungsträger zu speichern.

Hierdurch wird mit geringem Aufwand eine deutliche Verbesserung der Logistik geschaffen, unter Aktualisierung der jeweiligen Positionsdaten. Insbesondere kann ein bereits vorhandenes drahtloses Netzwerk, wie zum Beispiel ein Hof-WLAN eines Betriebes genutzt werden, wobei die Zugfahrzeuge bzw. Nutzfahrzeuge hierzu im Allgemeinen mit entsprechenden drahtlosen Sende-und Empfangs-Einrichtungen ausgestattet sind.

Als drahtlose Datenübertragung kann grundsätzlich ein WLAN des Betriebes eingesetzt werden,
Gemäß einer weiteren Ausführungsform kann alternativ hierzu, bzw. wenn das WLAN oder ein Zugang zum WLAN fehlen sollte, die Übermittlung der Positionsdaten z.B. auch über ein Mobilfunknetz eingesetzt werden.

Insbesondere bei Wechselbrücken können zusätzlich zu den Signalen des ECAS auch Fahrdynamik-Signale wie die Ermittlung einer Vorwärts-Fahrt und Rückwärts-Fahrt bzw. der Stillstand des Fahrzeugs, sowie das Einlegen der Feststellbremse ermittelt und herangezogen werden, um ein Melde-Ereignis zu erfassen.

Der Abladevorgang und Aufnahmevorgang von Umschlag-Containern, d. h. insbesondere Bauschuttcontainern und Übersee-Containern, kann in gleicher Weise wie bei Wechselbrücken erfolgen. Hierbei kann insbesondere die Druckveränderung im Fahrwerk, d. h. insbesondere in pneumatischen Luftfedern ermittelt werden. Sinkt der Luftdruck oder verändert sich der Luftdruck der verschiedenen Achsen, kann ein Abladevorgang, z. B. eines Bauschuttcontainers oder Übersee-Containers, erfasst werden, was einem Entladevorgang zugeordnet werden kann. Steigt der Luftdruck, deutet dies darauf hin, dass der Container aufgeladen wurde. Diese Bewertungen können insbesondere auch über vorgegebene Mess-Zeiträume Δ erfolgen, da ein Aufnahmevorgang und Abladevorgang eines derartigen Umschlag-Containers über einen zeitlich begrenzten Vorgang erfolgt, um insbesondere auch eine Fehl-Erfassung anderer Ereignisse zu verhindern.

Vorteilhaft ist hierbei die Heranziehung des EBS des Nutzfahrzeugs statt des TEBS des Anhängefahrzeugs, da Signale des TEBS bei mangelnder Stromversorgung beim abgeschalteten Anhänger gegebenenfalls nicht richtig weitergegeben werden.

Hierbei kann auch ein Wechselbrücken-Anhänger eingesetzt sein, der wie ein Wechselbrückenfahrzeug den Aufbau hoch und runter senken kann, um die Wechselbrücke auf- und abzuladen. Die Ansteuerung hierfür erfolgt vorzugsweise durch das TEBS bzw. TEBS-Steuergerät. Beim Auf- und Abladen der Wechselbrücke mit einem solchen Anhänger liegt somit die Datenverbindung vor.

Das erfindungsgemäße Verfahren kann sowohl im Zugfahrzeug als auch im Anhänger bzw. Trailer durchgeführt werden. Wenn der Anhänger mit einer eigenen Telematik ausgestattet ist, kann er bei Fehlen einer Telematik im Zugfahrzeug sein Positionssignal autark senden.

Weiterhin kann eine Wechselbrücke auf dem Zugfahrzeug und eine Wechselbrücke auf dem Anhänger vorgesehen sein. Hier kann das EBS in Kommunikationsverbindung mit der TEBS treten und feststellen, welche Wechselbrücken abgeladen wurden. Alternativ hierzu kann vorgesehen sein, dass der Wechselbrückenanhänger diese Information selbstständig über die eigene Telematik übermittelt und feststellt.

Beim Abladevorgang und Aufnahmevorgang von Anhängerfahrzeugen, d. h. dem Ankuppeln und Abkuppeln von Deichselanhängern einschließlich Drehschemelanhängern und von Sattelaufliegern und gegebenenfalls weiteren Fahrzeugen mit eigener Bremsanlage können ergänzend Daten aus dem elektronischen Anhänger-Bremssystem TEBS herangezogen werden, insbesondere das Einlegen und Auskuppeln einer Feststellbremse. Weiterhin kann auch bereits der Datenverbindungs-Anschluss zwischen Anhängerfahrzeug und Zugfahrzeug, d. h. das Ankoppeln des TEBS an das EBS über eine Daten-Schnittstelle, bspw. CAN-Bus, ergänzend herangezogen werden. Auch das pneumatische Ankuppeln, d. h. der Anschluss des Anhängers an den roten Kupplungskopf der Versorgungsleitung des Zugfahrzeugs und an den gelben Kupplungskopf der Betriebsbrems-Leitung (pneumatischer Brems-Steuerdruck) kann hier herangezogen werden, um das Herstellen einer pneumatischen Verbindung oder das Beenden der pneumatischen Verbindung sicher zu ermitteln.

Bei sämtlichen Abladevorgängen und Aufnahmevorgängen der verschiedenen Ladungsträger können Fahrzeugbewegungen des Nutzfahrzeugs ergänzend herangezogen werden. Hierbei können Getriebe-Informationen und Raddrehzahlinformationen ermittelt werden, z. B. das Einlegen eines entsprechenden Ganges, da z. B. eine Wechselbrücke nicht von vorwärts aufgeladen werden kann. So können verschiedene Abkoppel- und Aufnahmevorgänge auch durch die zeitliche Abfolge der verschiedenen Fahrtrichtungen des Nutzfahrzeugs erfasst werden.

Beim Abladevorgang und Aufnahmevorgang einer Wechselbrücke kann das Absenken und Anheben des Fahrwerks des Fahrzeugs, zusammen mit Änderungen der Masse, die aus dem pneumatischen ECAS-System ermittelt werden kann, herangezogen werden, so dass eine eindeutige Erkennung derartiger Abladevorgänge und Aufnahmevorgänge einer Wechselbrücke ermöglicht ist.

Somit kann über das jeweilige Nutzfahrzeug der Aufnahmevorgang und Abladevorgang erfasst werden. Diese Vorgänge können auch weiter differenziert übermittelt werden, z. B. auch bei Schüttgut als quantitativ spezifizierte Abladevorgänge und Aufnahmevorgänge. Wenn z. B. Beton oder anderes Baugut als Schüttgut an verschiedenen Abladestellen abgeladen wird, können die Masseänderungen den Positionsdaten zugeordnet werden, so dass im Flottenmanagementsystem gespeichert wird, welche Mengen des Schüttgutes an verschiedenen Positionsdaten abgeladen wurden.

Weiterhin ist erfindungsgemäß auch das Be- und Entladen von Ware aus einem Anhänger möglich. So kann gemäß einer Ausführungsform vorgesehen sein, das durch das ECAS erkannt wird, dass z.B. ein Mensch mit einer Hubameise oder mit einem Gabelstapler auf den Trailer gefahren ist, d.h. hierdurch die ermittelte Masse auf der Ladefläche zunächst angestiegen ist, um dann sprungartig abzufallen, weil der Stapler mit Ladung vom Anhänger fährt. Hierzu kann erfindungsgemäß ein Vorher- Nachher Vergleich vorgesehen sein, was in einem definierten Intervall oder auch dynamisch, d.h. insbesondere in Abhängigkeit der Messung vorgesehen sein kann, z.B. bei Erkennen der Masse-Zunahme und Masse-Abnahme. So kann auch der Druckverlauf über die verschiedenen Luftfederbälge ausgewertet werden. Wenn somit der Fahrer das Fahrzeug mit Stapler besteigt, so wird an der letzten Achse des Fahrzeugs ein höherer Druckwert in den Bälgen vorliegen als an der ersten. Je weiter er hineinfährt desto weiter verlagert sich der Druck in den Bälgen nach vorne. Über die Auswertung dieses Druckverlaufes ist ebenfalls eine Be- oder Entladung des Fahrzeugs an einer bestimmten Position erkennbar.

Das Netzwerk für die drahtlose Signalübermittlung kann vorteilhafterweise ein Betriebshof-Netzwerk sein, insbesondere ein WLAN bzw. WiFi, das bei derartigen Betriebshöfen oftmals vorgesehen ist. Alternativ hierzu können die Signale auch über entsprechende Mobilfunk-Schnittstellen übertragen werden.

Die Erfindung wird im Folgenden anhand der beiliegenden Zeichnungen an einigen Ausführungsformen näher erläutert. Es zeigen:
- Fig. 1: einen Betriebshof mit Fahrzeuggespannen und mobilen, austauschbaren Transport-Einheiten an verschiedenen Positionen;
- Fig. 2: verschiedene Fahrzeug-Gespanne und Ladungsträger; und
- Fig. 3-7: Flussdiagramme erfindungsgemäßer Verfahren.

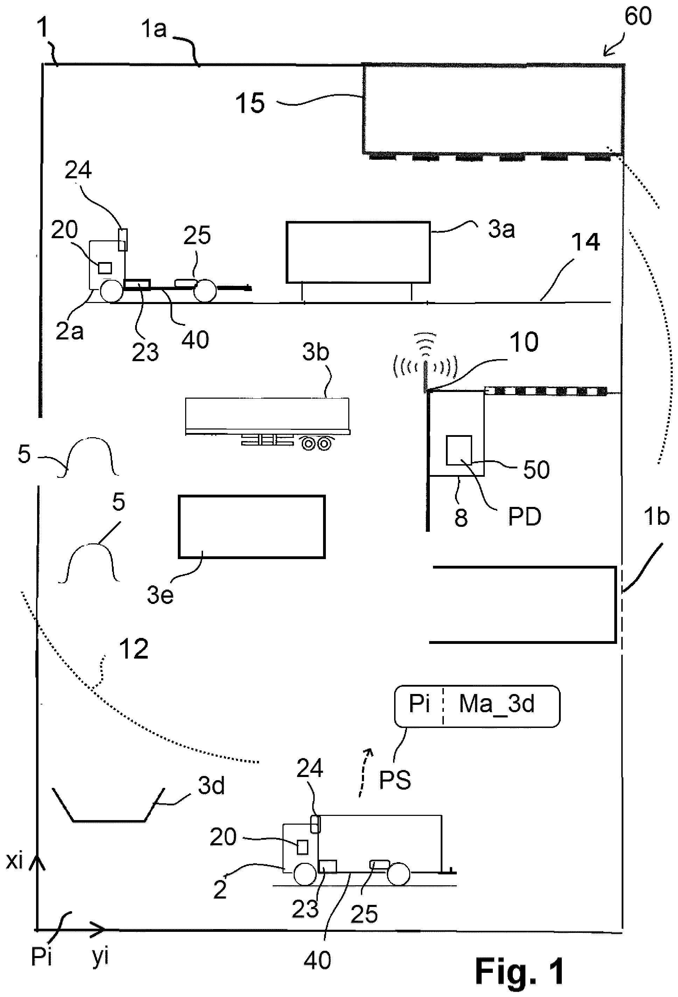

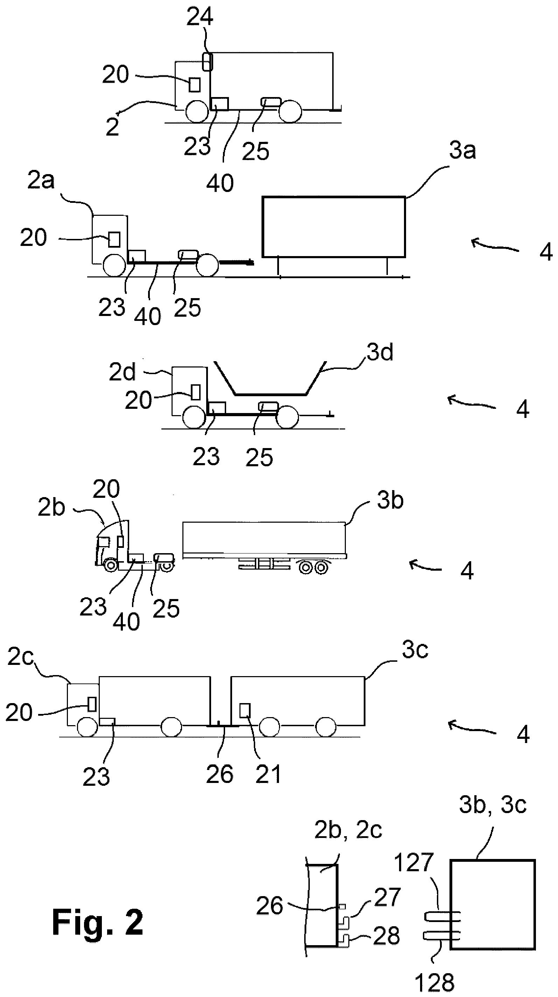

Ein in Figur 1 gezeigter Betriebshof 1 stellt ein durch eine Begrenzung 1a räumlich begrenztes Gebiet dar, das über eine Zufahrt 1b von außen zugänglich ist. Der Betriebshof 1 kann durch ein zweidimensionales Positionsdaten-System zur eindeutigen Kennzeichnung von Positionen P1, P2, ... Pi beschrieben werden. Auf dem Betriebshof 1 sind verschiedene Fahrzeuge 2 sowie mobile, austauschbare Ladungsträger 3 vorgesehen:
Als Fahrzeuge 2 sind in Fig. 1 und 2 z.B. ein Trägerfahrzeug 2a für eine Wechselbrücke 3a und in Fig. 2 ein Sattelzug 2b für einen Sattelauflieger 3b gezeigt, sowie ein Zugfahrzeug 2c für einen Deichselanhänger 3c und ein Nutzfahrzeug 2d zur Aufnahme eines Containers 3d.

Die Wechselbrücke 3a, der Sattelauflieger 3b, der Deichselanhänger 3c und der Container 3d stellen somit verschiedene mobile, austauschbare Ladungsträger 3 dar, die zum Transport von Ladung dienen und auf dem Betriebshof 1 an verschiedene Positionen Pi verstellt werden können. Jeweils ein Fahrzeug 2 mit einem oder mehreren Ladungsträgern 3 bildet eine Fahrzeug-Transport- Kombination 4.

In dem Betriebshof 1 sind weiterhin mehrere Schüttgut- Abladestellen 5, z. B. für Beton und Kies als Baumaterialien, oder auch zur Entsorgung als z. B. Bauschutt-Abladestellen vorgesehen. Schließlich ist in oder an dem Betriebshof 1 eine Kommunikations-Zentrale 8 vorgesehen, die gemäß dieser Ausführungsform mit einer WLAN Sende- und Empfangseinheit 10 ausgestattet oder verbunden ist, zur Ausbildung eines Betriebshofs-Netzwerkes 12 zur drahtlosen Datenübertragung.

Auf dem Betriebshof 1 können ergänzend Fahrwege 14 bzw. Straßen für die einzelnen Fahrzeuge 2 bzw. Fahrzeug-Transport-Kombinationen 4 vorgesehen sein, dies ist aber nicht erforderlich. Weiterhin sind im Allgemeinen Gebäude 15, z. B. mit Be- und Entladestationen, z. B. Rampen, vorgesehen, die von den zu be- oder entladenden Fahrzeug-Transport-Kombinationen 4 angefahren werden.

Die verschiedenen Positionen Pi zumindest der verschiedenen Ladungsträger 3, vorteilhafterweise auch der verschiedenen Fahrzeuge 2, auf dem Betriebshof 1 werden in einer ständig aktualisierten Positionsdatei PD gespeichert, die vorteilhafterweise an die Kommunikations-Zentrale 8 angeschlossen ist, d. h. von ihr verwaltet wird, z. B. in einer in der Kommunikations-Zentrale 8 vorgesehenen Speichereinheit 50. Hierbei können die Positionen Pi z. B. entsprechend einem zweidimensionalen Koordinatensystem, d. h. als (xi, yi) gespeichert werden, wie in Fig. 1 angedeutet ist. Zur Aktualisierung der Positionsdaten Pi werden von den Fahrzeugen 2 bei bestimmten Melde-Ereignissen M Positions-Meldesignale PS gebildet, die jeweils das Melde-Ereignis M, d.h. insbesondere einen Abladevorgang Ma oder einen Aufnahmevorgang Mb, und weiterhin die betreffenden Positionsdaten Pi aufweisen, d.h. die Positions-Meldesignale PS weisen zumindest die Struktur (Pi, M) auf, wobei das Melde-Ereignis M z.B. als Ma_3d gebildet sein kann, d.h. ein Abladevorgang Ma eines Containers 3d.

Somit wird ein Positions-Meldesignal PS gebildet, wenn ein Fahrzeug 2 einen Ladungsträger 3 aufnimmt, d.h. ein Aufnahmevorgang Mb vorliegt, und wenn der Ladungsträger 3 später an einer anderen Position Pi wieder abgeladen wird. In der Positionsdatei PD ist somit jeweils der zuletzt gemeldete Vorgang abgespeichert.

Die Positions-Meldesignale PS werden von dem jeweiligen Fahrzeug 2 drahtlos, z.B. über das Betriebshof-Netzwerk 12 und die WLAN -Sende-Empfangs-Einrichtung 10 zu der Kommunikations-Zentrale 8 übertragen, damit sie in der Positionsdatei PD gespeichert werden, d. h. insbesondere vorher gespeicherte Daten aktualisiert werden. Falls ein derartiger WLAN-Zugang nicht besteht bzw. nicht vorteilhaft ist, kann auch eine andere drahtlose Datenübertragung, z.B. über ein Mobilfunknetz, erfolgen. Die Melde-Ereignisse M hängen hierbei vorteilhafterweise von dem jeweiligen mobilen, austauschbaren Ladungsträger 3 ab. Hierbei sollen grundsätzlich derartige Melde-Ereignisse M erfasst werden, bei denen eine aktuelle Position Pi geändert wird, z. B. ein Ladungsträger 3 von seiner Position weg bewegt oder entleert oder beladen wird; somit wird vorteilhafterweise ein Anfangs-Zeitpunkt einer Entleerung oder Beladung gemeldet, vorzugsweise auch ein Endzeitpunkt. Weiterhin wird gemeldet, wenn der Ladungsträger 3 nach einer Fahrt mit dem jeweiligen Fahrzeug 2 wiederum in seiner neuen Position Pi auf dem Betriebshof 1 abgestellt wird.

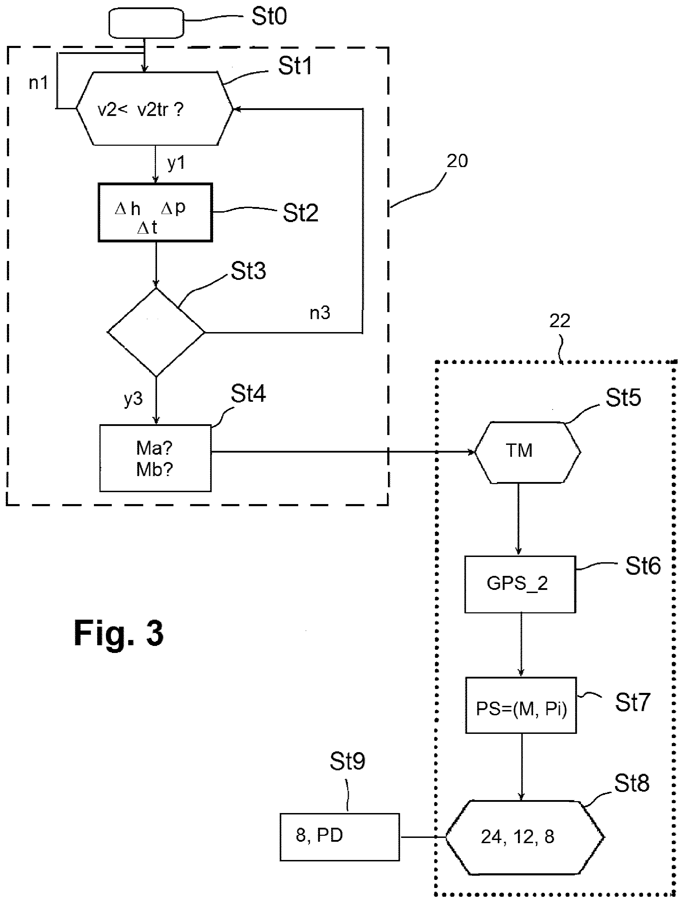

Zum Erfassen eines Melde-Ereignisses M werden die Informationen aus einem ECAS-System (electronically controlled air suspension) 23 benutzt, d.h. Mess-Signale S55 des ECAS-Systems 23. Hierbei wird die zeitliche Reihenfolge der Hubhöhenveränderung Δh einer Luftfedereinrichtung 25 und/oder eine Luftdruckänderung Δp des Luftdrucks P der Luftfedereinrichtung 25, d.h. ein Anstieg oder eine Abnahme des Luftdrucks P ermittelt, um ein Melde-Ereignis zu detektieren. Somit kann das Abstellen/Aufladen über die Reihenfolge der Abläufe und/oder über die Druck-Veränderung im ECAS-System 23 ermittelt werden, bzw. zur Plausibilitätsprüfung über beides. Figur 3 zeigt ein Flussdiagramm eines Verfahrens zur Positionserfassung einer Wechselbrücke 3a (Wechselbehälter), mit den Schritten:
Nach dem Start in Schritt St0 wird in Schritt St1 die aktuelle Fahrzeug-Geschwindigkeit v2 erfasst, z. B. über den CAN-Bus entsprechend der Tacho-Geschwindigkeit, bzw. aus dem ABS-Steuergerät als ABS- Referenzgeschwindigkeit, oder auch direkt aus den über den CAN-Bus übertragenen Raddrehzahlen n. Die Fahrzeug-Geschwindigkeit v2 wird mit einer Grenz-Fahrzeuggeschwindigkeit v2tr verglichen, d. h. bei Unterschreiten der Grenz-Fahrzeuggeschwindigkeit v2tr wird von einem Stillstand 65 des Fahrzeugs 2 ausgegangen. Falls dies der Fall ist, werden gemäß der Verzweigung y1 nachfolgend im Schritt St2 aus dem ECAS-System 23 aktuelle Messsignale S55 einer Hubhöhenveränderung Δh der Luftfederung, d. h. einer oder mehrerer Luftkissen der luftgefederten Achsen des Fahrzeugs 2, und/oder eine Änderung Δp des Luftdrucks der Luftfedereinrichtung 25, d. h. der pneumatischen Luftkissen der Achsen des Fahrzeugs 2 ermittelt. Diese Änderungen können z. B. jeweils über einen Mess-Zeitraum Δt von einigen Sekunden erfolgen, d.h. es wird somit ein Differenzenquotient Δp/Δt oder Δh/Δt der Messungen oder entsprechend eine zeitliche Ableitung dp/dt bzw. dh/dt des Mess-Signals, also des Drucks oder der Niveauhöhe, ermittelt, um eine Hubhöhenveränderung Δh und/oder eine Änderung des Luftdrucks Δp festzustellen.

In dem nachfolgenden Entscheidungs-Schritt St3 werden die in Schritt St2 erfassten Messwerte Δh und Δp oder Δh/Δt und Δp/Δt dann bewertet, d. h. mit Grenz-Werten Δh_tr und Δp_ tr verglichen, um diese von einem Rauschen zu unterscheiden. Falls die Messwerte größer als diese Grenzwerte sind und somit eine Änderung erkannt wird, wird gemäß der Verzweigung y3 nachfolgend in Schritt St4 ein Ablade-Vorgang Ma oder ein Aufnahme-Vorgang Mb erkannt, woraufhin in Schritt St5 eine Melde-Botschaft TM ausgegeben wird, ein Positions-Melde-Signal PS von dem Fahrzeug 2 an die Kommunikations-Zentrale 8 über das Betriebshof-Netzwerk 12 auszusenden. Die Schritte St1 bis St5 können hierbei gemäß einer Ausführungsform in der EBS-Steuereinrichtung 20 des Fahrzeugs 2 durchgeführt werden.

In Schritt St5 gibt somit z.B. die EBS-Steuereinrichtung 20 eine Melde-Botschaft TM an eine andere Einheit, vorzugsweise eine Telematik-Steuereinrichtung 22 des Fahrzeugs 2, die dann in Schritt St6 und St7 das Positions-Melde-Signal PS bildet.

Hierzu nimmt die Telematik-Steuereinrichtung 22 in Schritt St6 eine aktuelle GNSS-Position GNSS_2 auf,
in Schritt St7 bildet die die Telematik-Steuereinrichtung 22 das Positions-Meldesignal PS mit den Einträgen (Meldeereignis M; Positionsdaten Pi),
und in Schritt St8 wird das so gebildete Positions-Meldesignal PS über die Fahrzeug-WLAN-Schnittstelle 24 und das drahtlose Betriebshof-Netzwerk 12 (WLAN oder WiFi) an die Kommunikations-Zentrale 8 gesendet,
die dann in Schritt St9 die Positionsdaten Pi in einer aktuellen Positionsdatei PD speichert, d.h. die Positionsdatei PD ständig aktualisiert.

Die Positionsdatei PD kann weitere Informationen zur Ladung und Ladungsträger enthalten, wenn diese z.B. vorab im System, d.h. insbesondere durch den Benutzer/Fahrer oder auch automatisch durch Erkennungseinrichtungen, eingegeben worden sind.

Gemäß einer hierzu alternativen Ausbildung kann die Wechselbrücke auch an einem Anhänger, z.B. einem Deichselanhänger 3c aufgenommen sein, weiterhin kann auch eine andere bereits beschriebene Anhängerart vorgesehen sein, die ein Trailer-EBS (TEBS) aufweist, sodass die Schritte St1 bis St5 bzw. ein Teil dieser Schritte in einer TEBS-Steuereinrichtung 21 durchgeführt werden können. Dann kann auch die TEBS-Steuereinrichtung 21, wenn sie diese Schritte bzw. einen Teil dieser Schritte durchführt, nachfolgend selber in Schritt St6 und St7 das Positions-Melde-Signal PS bilden und die Meldebotschaft TM erzeugen.

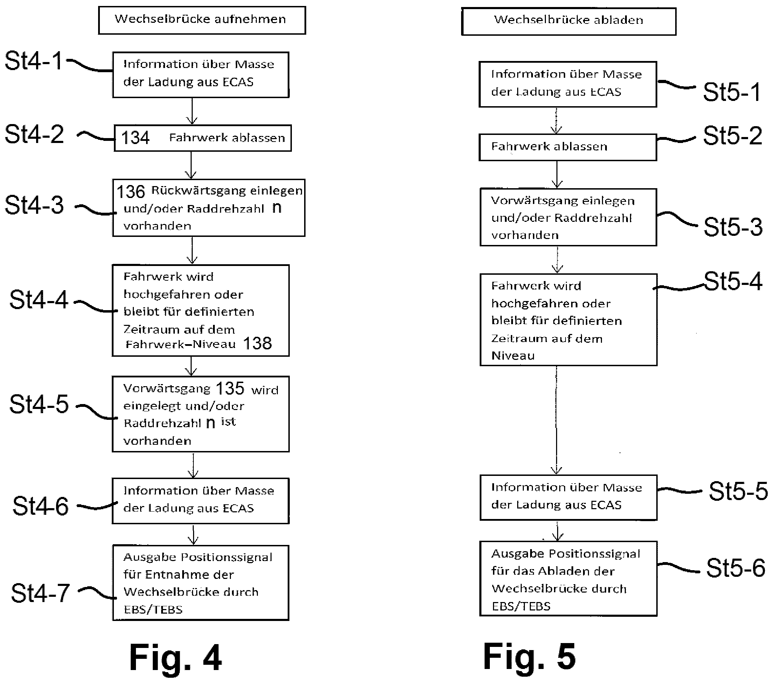

Figur 4 zeigt detaillierter den Vorgang "Wechselbrücke aufnehmen", mit den Schritten:
In Schritt St4-1 werden Informationen über die Masse m und gegebenenfalls über die Ladung aus dem ECAS entnommen. In Schritt St4-2 wird über das ECAS 23 das Fahrwerk 40 abgelassen, d. h. durch Ansteuerung der pneumatischen Luftfedern 25 Druckluft abgelassen und hierdurch das Niveau abgesenkt.
In Schritt St4-3 wird dann der Rückwärtsgang eingelegt, was über einen entsprechenden Gangwahl-Sensor ermittelt werden kann. Vorteilhafterweise wird weiterhin auch die tatsächliche Rückwärts-Bewegung ermittelt, insbesondere über die Raddrehzahlen n und ein Gangwahl-Signal GS, das im EBS und TEBS zur Verfügung steht, wobei grundsätzlich auch aus einer Getriebedrehzahl GD und dem Gangwahl-Signal GS die Rückwärtsfahrt ermittelt werden kann.

Somit wird das Fahrzeug 2a unter die Wechselbrücke 3a verfahren, woraufhin dann gemäß Schritt St4-4 das Fahrwerk 40 wieder hochgefahren wird, durch entsprechende Ansteuerung der pneumatischen Luftfedereinrichtung 25 über das ECAS 23, wobei als weiteres Kriterium angesetzt werden kann, dass das Fahrwerk 40 für einen definierten Zeitraum auch auf diesem Niveau h bleibt, d. h. der Einstellvorgang beendet wird und für einen nachfolgenden Transport der Wechselbrücke 3a eingestellt ist, d. h. die Wechselbrücke 3a hierdurch angehoben worden ist.

Gemäß Schritt St4-5 wird dann die Fahrzeug-Transport-Kombination 4 erkannt, die hier somit ein beladenes Fahrzeug 2 darstellt,
z. B. durch Einlegen des Vorwärtsgangs, und/oder eine Erhöhung der Raddrehzahl n, da das beladene Fahrzeug 2 auch rückwärts anfahren kann. Somit wird in Schritt St4-5 bei Vorliegen der Bedingungen das Fertigstellen der Fahrzeug-Transport-Kombination 4 erkannt.

Gemäß Schritt St4-6 werden dann Informationen über Masse m der Ladung aus dem ECAS 23 ermittelt,
woraufhin dann in Schritt St4-7 die Ausgabe der Melde-Botschaft TM entsprechend Schritt St5 der Figur 3 erfolgt, d.h. es wird die Melde-Botschaft TM an die Telematik-Steuereinrichtung 22 ausgegeben, die dann in den Schritten St6 bis St8 der Fig. 3 das Positions-Meldesignal PS bildet und an die Kommunikations-Zentrale 8 ausgibt.

Figur 5 zeigt ein der Figur 4 entsprechendes Verfahren zum Ermitteln des Vorgangs "Wechselbrücke abladen", mit den Schritten:
St5-1 bis St5-2 entsprechend den Schritten St4-1, St4-2 der Figur 4,
Der Schritt St5-3 entspricht grundsätzlich St4-3, wobei hier jedoch ermittelt wird, ob der Vorwärtsgang eingelegt wird,
Schritt St5-4 entspricht dem Schritt St4-4,
Schritte St5-6 und St5-7 entsprechen den entsprechenden Schritten St4-6, St4-7 in der Figur 4.

Somit kann das Aufnehmen bzw. Verladen einer Wechselbrücke 3a grundsätzlich dadurch erkannt werden, dass Wechselbrücken 3a nach hinten abgenommen werden, da das Fahrzeug 2a nach hinten unter die Wechselbrücke 3a fährt, und entsprechend umgekehrt nach dem Abkuppeln bzw. Abladen der Wechselbrücke 3a das Fahrzeug 2a nach vorne unter der Wechselbrücke 3a wegfährt.

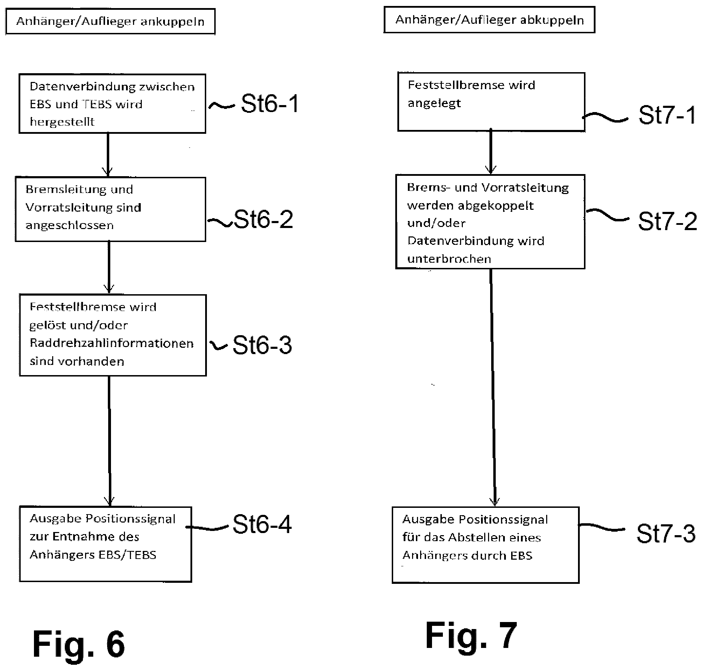

Figur 6 zeigt ein Flussdiagramm des Erkennens des Vorgangs "Anhänger/Auflieger ankuppeln:
In Schritt St6-1 wird eine Datenverbindung 26 zwischen der EBS- Steuereinrichtung 20 des Fahrzeugs 2 und der TEBS-Steuereinrichtung 21 des Anhängers 3b, 3c hergestellt.

Anhänger bzw. Auflieger sind gemäß den obigen Beispielen insbesondere Sattelauflieger 3b, Deichselanhänger 3c und/oder Drehschemelanhänger.

Gemäß Schritt St6-2 wird die Brems-Vorratsleitung 127 des Anhängers 3b, 3c an den roten Kupplungskopf 27 des Zugfahrzeugs 2b, 2c angeschlossen, weiterhin wird die Brems-Steuerleitung 128 des Anhängers 3b, 3c an den gelben Kupplungskopf 28 des Zugfahrzeugs 2b, 2c angeschlossen.

Diese pneumatischen Anschlüsse können in Schritt St6-2 z. B. durch Drucksensoren des Zugfahrzeugs 2b, 2c und/oder der Anhängers 3b, 3c ermittelt werden.

Somit sind die elektrischen und pneumatischen Anschlüsse zwischen beiden Fahrzeugen 2, 3 ausgebildet. Nachfolgend wird in Schritt St6-3 überprüft, ob die Feststellbremse des Zugfahrzeugs 2 und/oder des Anhängerfahrzeugs 3 gelöst ist. Ergänzend oder alternativ hierzu wird überprüft, ob bereits eine Bewegung des Gespanns 4 ermittelt werden kann, indem Raddrehzahlen n des Zugfahrzeugs 2 und/oder des Anhängerfahrzeugs 3 ermittelt werden, d. h. n > 0.

Gemäß Schritt St6-4 erfolgt wiederum die Ausgabe der Melde-Botschaft TM von der EBS-Steuereinrichtung 10 an die Telematik-Steuereinrichtung 22, nachfolgend wie oben in Fig. 3 beschrieben in den Schritten St6, St7 ein Positions- Meldesignals PS zu bilden,
das somit als Melde-Ereignis einen Aufnahmevorgang Mb enthält, dass der Anhänger 3b, 3c entnommen wurde, d. h. von seiner derzeitigen gespeicherten Position Pi entfernt wurde.

Entsprechend wird nachfolgend mit Bezug zu Figur 7 die Ermittlung des Vorgangs "Anhänger/Auflieger abkuppeln" beschrieben.

In Schritt St7-1 wird überprüft, ob die Feststellbremse 35 des Anhängers 3b, 3c eingelegt wird.

In Schritt St7-2 wird ermittelt, ob die Brems-Steuerleitung 128 des Anhängers 3b, 3c von dem gelben Kupplungskopf 28 des Fahrzeugs 2b, 2c abgekoppelt bzw. unterbrochen wurde und
ob die Vorratsleitung 127 des Anhängers 3b, 3c von dem roten Kupplungskopf 27 des Zugfahrzeugs 2b, 2c abgekoppelt bzw. unterbrochen wurde.

Somit sind die pneumatischen Verbindungen gelöst. Anders als in den Verfahren der Figur 6 kann vorgesehen sein , dass nicht überprüft wird, ob die Datenverbindung zwischen EBS-Steuereinrichtung 20 und TEBS- Steuereinrichtung 21 geändert wurde, da auch der abgestellte Anhänger 3c bzw. Auflieger 3b grundsätzlich weiter informationstechnisch an das Zugfahrzeug 2, während des Lösens der Pneumatikleitungen, angeschlossen sein kann.

Anschließend erfolgt in Schritt St7-3 die Ausgabe der Melde-Botschaft TM für das Abstellen des Anhängers 3b, 3c durch die EBS-Steuereinrichtung 20, woraufhin dann wiederum gemäß Fig. 3 in den Schritten St6, St7 das Positions-Meldesignal PS gebildet und nachfolgend in Schritt St8 ausgegeben wird.

Somit kann jeweils der Vorgang des Verfahrens eines Anhängers 3b, 3c, d. h. das Entfernen von der aktuellen Position Pi, und anschließend das Verfahren und das Abstellen des Anhängers 3b, 3c an der neuen Position Pi selbsttätig detektiert und an die Kommunikations-Zentrale 8 übermittelt werden.

Die Kommunikations-Zentrale 8 kann grundsätzlich vermerken, wenn ein Anhänger 3 gemäß den vorliegenden Daten zwar von der aktuellen Position Pi entfernt wurde, jedoch noch kein Abstellvorgang ermittelt worden ist; derartige Anhänger 3 können hierbei gekennzeichnet werden mit einem Daten-Zusatz. Hierbei können zum einen derzeit auf dem Betriebshof 1 beförderte Anhänger 3 gekennzeichnet werden, insbesondere direkt durch Eintragen in eine Karte; weiterhin können auch außerhalb des Betriebshofes sich befindende Anhänger 3 erfasst werden, wobei hier GNSS-Koordinaten übertragen werden können.

Weiterhin ist es auch möglich, dass die Kommunikations-Zentrale 8 vorhandene Abstellplätze verwaltet, und somit auch das Freiwerden eines Abstellplatzes vermerkt; somit kann auf Anfrage eines Zugfahrzeugs 2 mitgeteilt werden, wo ein freier Abstellplatz vorliegt.

Falls keine drahtlose Verbindung zur Kommunikations-Zentrale 8 erstellt werden kann, kann vorgesehen sein, dass die Positionsdaten Pi in einem Speicher 66 aufgezeichnet und gespeichert werden und nach Erstellen einer drahtlosen Verbindung die gespeicherten Positionsdaten Pi dann an die Kommunikations-Zentrale 8 übertragen werden, woraufhin die gespeicherten Daten dann gelöscht werden können.

Weiterhin kann erfindungsgemäß vorgesehen sein, dass beim Herunterfahren und/oder Ausschalten der Telematikeinheit ebenfalls eine Positionsdatei gesendet wird.

### Bezugszeichenliste (Teil der Beschreibung)

- 1: Erfassungsgebiet, insbesondere Betriebshof
- 1a: äußere Abgrenzung
- 1b: Zufahrt

- 2: Fahrzeuge, z. B.
- 2a: Trägerfahrzeug für eine Wechselbrücke 3a,
- 2b: Zugfahrzeug eines Sattelzuges 4 oder
- 2c: Zugfahrzeug eines Deichselzug-Gespanns 4
- 2d: Nutzfahrzeug zur Aufnahme eines Transport-Containers

- 3: mobiler, austauschbarer Ladungsträger
- 3a: Wechselbrücke
- 3b: Sattelauflieger
- 3c: Deichselanhänger
- 3d: Transport-Container, z. B. Bauschuttcontainer
- 3e: Iso-Container oder Überseecontainer, als Beispiele von Transport-Containern

- 4: Fahrzeug-Transport-Kombination, aus einem Fahrzeug 2 und einem mobilen, austauschbaren Ladungsträger 3
- 5: Schüttgut-Abladestelle
- 8: Kommunikations-Zentrale
- 10: Sende-Empfangs-Einheit des drahtlosen Netzwerks, insbesondere WLAN
- 12: Betriebshof-Netzwerk, z. B. WLAN
- 14: Fahrwege im Betriebshof 1
- 15: Gebäude
- 20: EBS-Steuereinrichtung des Nutzfahrzeugs 2
- 21: TEBS-Steuereinrichtung des Anhängers 3
- 22: Telematik-Steuereinrichtung des Nutzfahrzeugs 2
- 23: ECAS-System
- 24: Fahrzeug-WLAN-Schnittstelle des Nutzfahrzeugs 2

- 25: Luftfedereinrichtung, Niveauregelsystem des Nutzfahrzeugs 2

- 26: Datenverbindung zwischen der EBS- Steuereinrichtung 20 des Fahrzeugs 2 und der TEBS-Steuereinrichtung 21 des Anhängers 3b, 3c
- 27: roter Kupplungskopf des Zugfahrzeugs 2b, 2c,
- 28: gelber Kupplungskopf des Zugfahrzeugs 2b, 2c

- 40: Fahrwerk des Nutzfahrzeugs (2)
- 50: Datenspeicher
- 55: ECAS-System
- 60: Flottenmanagementsystem
- 65: Stillstand des Nutzfahrzeugs 1, d.h. insbesondere v=0

- 127: Brems-Vorratsleitung des Anhängers 3b, 3c, zum Anschluss an den roten Kupplungskopf 27 des Zugfahrzeugs 2b, 2c
- 128: Brems-Steuerleitung des Anhängers 3b, 3c, zum Anschluss an den gelben Kupplungskopf 28 des Zugfahrzeugs 2b, 2c

- M: Melde-Ereignis
- Ma: Abladevorgang, Abladen oder Abkoppeln eines Ladungsträgers 3
- Mb: Aufnahmevorgang, Aufnahme oder Ankoppeln eines Ladungsträgers 3

- Pi: Positionsdaten, Pi=(xi, yi)
- PD: Positionsdatei
- PS: Positions-Meldesignal, PS=( Meldeereignis M; Positionsdaten Pi),

- S55: Mess-Signale des ECAS-Systems 55

- TM: Melde-Botschaft
- Δh: Hubhöhenänderung, Niveau-Änderung des Fahrwerks 40
- Δp: Luftdruck-Änderung im Luftfedersystem
- Δt: Mess-Zeitraum

- 134: Steuersignal zum Fahrwerk-Ablassen
- 135: Vorwärtsgang
- 136: Rückwärtsgang
- 137: Gangschalt-Signal
- 138: Fahrwerk-Niveau
- 139: Niveauverstellungs-Steuersignale
- 140: Ladung
- 142: Feststellbremse

## Patentansprüche

1. Verfahren zur Positionserfassung mindestens eines mobilen, austauschbaren,
durch ein Nutzfahrzeug (2) verfahrbaren Ladungsträgers (3; 3a, 3b, 3c, 3d) in einem abgegrenzten Erfassungsgebiet (1), in dem der mindestens eine mobile, austauschbare Ladungsträger (3) durch das mindestens eine Nutzfahrzeug (2) verstellt wird,
wobei von dem mindestens einen Nutzfahrzeug (2) als Melde-Ereignisse (M) Aufnahme-Vorgänge (Mb) und/oder Ablade-Vorgänge (Ma) des mindestens einen mobilen, austauschbaren Ladungsträgers (3) in dem Erfassungsgebiet (1) ermittelt werden,
von dem mindestens einen Nutzfahrzeug (2) zu den Melde-Ereignissen (M) Positionsdaten (Pi) zur Kennzeichnung der Position in dem Erfassungsgebiet (1) ermittelt werden, und
von dem mindestens einen Nutzfahrzeug (2) aus einerseits den ermittelten Melde-Ereignissen (M) und andererseits den Positionsdaten (Pi) Positions-Meldesignale (PS) gebildet und über ein drahtloses Netzwerk (12) an eine Kommunikations-Zentrale (8) übermittelt werden,
wobei in der Kommunikations-Zentrale (8) aus den empfangenen Positions-Meldesignalen (PS) die aktuellen Positionsdaten (Pi) des mindestens einen Ladungsträgers (3) ermittelt und in einem Datenspeicher (50) gespeichert und fortlaufend aktualisiert werden, **dadurch gekennzeichnet, dass** ein Abladevorgang (Ma) oder Aufnahmevorgang des Ladungsträgers (3) ermittelt wird durch Aufnahme von Messsignalen (S55) einer pneumatischen Luftfedereinrichtung (25) des Nutzfahrzeugs (2), welche als ein ECAS-System (23) des Nutzfahrzeugs (2) ausgebildet ist,
Ermitteln aus den Messsignalen (S55), ob eine zeitliche Hubhöhenveränderung (Δh) der Luftfedereinrichtung (25) und/oder eine Luftdruck-Änderung (Δp) in der Luftfedereinrichtung (25) des Nutzfahrzeugs (2) vorliegt, und
bei Ermittlung einer zeitlichen Hubhöhenveränderung (Δh) und/oder Luftdruck-Änderung (Δp) der Luftfedereinrichtung (25) Entscheiden, ob diese als Ablade-Vorgang (Ma) oder Aufnahme-Vorgang (Mb) zu bewerten ist, und
bei Ermittlung eines Ablade-Vorgangs (Ma) oder Aufnahme-Vorgangs (Mb) nachfolgend Bilden der Melde -Botschaft (TM), wobei
das Ermitteln, ob eine zeitliche Hubhöhenveränderung (Δh) vorliegt, mittels Vergleich der Messsignale (S55) mit vorgespeicherten Daten und Bewertung einer Differenz der Messsignale (S55) mit den vorgespeicherten Daten erfolgt.

2. Verfahren nach Anspruch 1, **dadurch gekennzeichnet, dass** der mindestens eine mobile, austauschbare Ladungsträger (3) aus der nachfolgenden Gruppen gewählt ist:
Wechselbrücken (3a) zur Aufnahme auf dem Nutzfahrzeug (2),
Sattelauflieger (3b) zur Aufnahme auf einem als Sattelzug (2b) ausgebildeten Nutzfahrzeug (2),
Deichselanhänger (3c) und Drehschemel-Deichselanhänger zum Anhängen an ein als Deichsel-Zugfahrzeug (2c) ausgebildetes Nutzfahrzeug (2),
Container (3d, 3e), insbesondere Iso-Container (3e), oder Überseecontainer (3e) oder Schuttcontainer (3d), zur Aufnahme durch ein Container-Fahrzeug (2d, 2e) als Nutzfahrzeug (2).

3. Verfahren nach einem der vorherigen Ansprüche, **dadurch gekennzeichnet, dass** die Aufnahme-Vorgänge (Mb) und Ablade-Vorgänge (Ma) vorbestimmte, definierte und mittels technischer Kupplungsmittel (27,28 , 127, 128) erfolgende Aufnahme-Vorgänge (Mb) und Ablade-Vorgänge (Ma) sind.

4. Verfahren nach einem der vorherigen Ansprüche, **dadurch gekennzeichnet, dass** in dem Erfassungsgebiet (1) mehrere Ladungsträger (3) und mehrere Nutzfahrzeuge (2) vorgesehen sind.

5. Verfahren nach einem der vorherigen Ansprüche, **dadurch gekennzeichnet, dass** das Erfassungsgebiet (1) ausgewählt ist aus der Gruppe, die enthält:
einen Betriebshof (1), mit einer äußeren Abgrenzung (1a) und einer oder
mehreren Zufahrten (1b) für die Nutzfahrzeuge (2),
eine Raststätte,
eine Baustelle,
ein Hafengebiet.

6. Verfahren nach einem der vorherigen Ansprüche, **dadurch gekennzeichnet, dass** die mobilen, austauschbaren Ladungsträger (3) durch die Nutzfahrzeuge (2)
- in das Erfassungsgebiet (1) angeliefert, und/oder
- zeitweise abgestellt, und/oder
- auf dem abgegrenzten Gebiet (1) verstellt und/oder
- von den Nutzfahrzeugen (2) aus dem Erfassungsgebiet (1) abtransportiert werden.

7. Verfahren nach einem der vorherigen Ansprüche, **dadurch gekennzeichnet, dass** das drahtlose Netzwerk (12) ein Betriebshof-WLAN (12) ist, zur protokollgestützten, nicht offenen Datenübertragung, insbesondere für lediglich die mobilen, austauschbaren Ladungsträger (3) und die Nutzfahrzeuge (2).

8. Verfahren nach einem der vorherigen Ansprüche, **dadurch gekennzeichnet, dass** zur Ermittlung des Melde-Ereignisses (M; Ma, Mb) zunächst aus fahrzeuginternen Daten (v2, n), insbesondere Fahrdynamik-Daten (v2, n) ermittelt wird, ob ein Stillstand (65, v=0) des Nutzfahrzeugs (2) vorliegt (St1), und bei Vorliegen eines Stillstands ( 65, v=0) aus zeitlich aufeinander folgenden Messsignalen (S55) ermittelt wird, ob als Melde-Ereignis (M) ein Abladevorgang (MA) oder ein Aufnahmevorgang (MB) vorliegt (St3, St4),
bei Erkennen eines Melde-Ereignisses (M) eine Melde -Botschaft (TM) von einer EBS-Steuereinrichtung (20) eines elektronischen Bremssystems (EBS) des Nutzfahrzeugs (2) gebildet und über einen fahrzeuginternen Datenbus (CAN) an eine Telematik-Steuereinrichtung (22) des Nutzfahrzeugs (2) ausgegeben wird (St5),
nachfolgend von der Telematik-Steuereinrichtung (22) die aktuellen Positionsdaten (Pi) ermittelt werden, insbesondere über ein globales Positionsbestimmungssystem (GNSS) (St6),
nachfolgend aus den Positionsdaten (Pi) und dem Melde-Ereignis (M; MA, MB) das Positions-Meldesignal (PS) gebildet und über das drahtlose Netzwerk (12) an die Kommunikations-Zentrale (8) ausgesandt wird (St7).

9. Verfahren nach einem der vorherigen Ansprüche, **dadurch gekennzeichnet, dass** der Ladungsträger (3) als eine Wechselbrücke (3a) oder ein Transport-Container (3d) ausgebildet ist.

10. Verfahren nach Anspruch 1, **dadurch gekennzeichnet, dass** das Ermitteln, ob eine zeitliche Hubhöhenveränderung (Δh) vorliegt, mittels Vergleich der Messsignale (S55) mit vorgespeicherten Daten aus Tabellen oder Kennlinien, und Bewertung einer Differenz der Messsignale (S55) mit den vorgespeicherten Daten mittels Schwellwerten erfolgt.

11. Verfahren nach einem der vorherigen Ansprüche, **dadurch gekennzeichnet, dass** ein Aufnahmevorgang (Mb) einer Wechselbrücke (3a) ermittelt wird durch die nachfolgenden Schritte:
Ermitteln einer aktuellen Masse (m) der Ladung aus einem pneumatischen Luftfeder-System (55) (St4-1),
Absenken oder Ablassen eines Fahrwerks (40) des Nutzfahrzeugs (2), durch Erfassen eines Steuersignals (134) zum Fahrwerk-Ablassen und/oder Erfassen einer Niveauabsenkung (St4-2),
Ermitteln eines Einlegevorgangs eines Rückwärtsgangs (136) aus einem Gangschalt-Signal (137) oder Ermitteln einer Rückwärtsfahrt aus Raddrehzahlsignalen (n) (St4-3),
Ermitteln eines Hochfahrens des Fahrwerks (40) oder eines Verbleibens auf dem vorgegebenen Fahrwerk-Niveau (138) über einen Mess-Zeitraum (Δt), aus Niveauverstellungs-Steuersignalen (139) oder Niveauhöhen-Mess-Signalen (St4-4),
nachfolgendes Ermitteln, dass ein Vorwärtsgang (135) eingelegt wird aus einem Gangschalt-Signal (137) und/oder einer Vorwärtsfahrt aus einem Raddrehzahlsignal (St4-5),
nachfolgendes Ermitteln einer Masse (m) der Ladung (140) oder des Nutzfahrzeugs (1) mit Ladung (140), die höher ist als die anfänglich ermittelte Masse (m) der Ladung (140) oder des Nutzfahrzeugs (1) ohne Ladung (St4-6),
wobei nachfolgend der Aufnahmevorgang (Mb) gemeldet wird, insbesondere als Melde -Botschaft (TM) zur nachfolgenden Bildung des Positions-Meldesignals (PS) mit aktuellen Positionsdaten (Pi).

12. Verfahren nach Anspruch 11, **dadurch gekennzeichnet, dass** die aktuellen Positionsdaten (Pi) während oder nach dem Aufnahmevorgang und/oder bei Erzeugen eines Gangschalt-Signals (137) und/oder bei Einlegen eines Vorwärtsgangs (135) oder Rückwärtsgangs (136) ermittelt werden.

13. Verfahren nach einem der vorherigen Ansprüche, **dadurch gekennzeichnet, dass** ein Abladevorgang (Mb) einer Wechselbrücke (3a) ermittelt wird durch die nachfolgenden Schritte:
Ermitteln einer aktuellen Masse (m) der Ladung (140) aus einem pneumatischen Luftfeder-System (55) (St5-1),
Absenken oder Ablassen eines Fahrwerks (40) des Nutzfahrzeugs (2), durch Erfassen eines Steuersignals (134) zum Fahrwerk-Ablassen und/oder Erfassen einer Niveauabsenkung (St5-2),
Ermitteln eines Einlegevorgangs eines Vorwärtsgangs (135) aus einem Gangschalt-Signal (137) oder Ermitteln einer Vorwärtsfahrt aus Raddrehzahlsignalen (n) (St5-3),
Ermitteln eines Hochfahrens des Fahrwerks (40) oder eines Verbleibens auf dem vorgegebenen Fahrwerk-Niveau (138) über einen Mess-Zeitraum (Δt), aus Niveauverstellungs-Steuersignalen (139) oder Niveauhöhen-Mess-Signalen (St5-4),
nachfolgendes Ermitteln, dass ein Vorwärtsgang (135) eingelegt wird aus einem Gangschalt-Signal (137) und/oder einer Vorwärtsfahrt aus einem Raddrehzahlsignal (n) (St5-5),
Ermitteln einer Masse (m) der Ladung (140), die niedriger ist als die anfänglich ermittelte Masse (m) der Ladung (140) (St5-6),
wobei nachfolgend der Abladevorgang (Mb) gemeldet wird, insbesondere als Melde -Botschaft (TM) zur nachfolgenden Bildung des Positions-Meldesignals (PS) mit aktuellen Positionsdaten (Pi).

14. Verfahren nach Anspruch 13, **dadurch gekennzeichnet, dass** die Ermittlung der Gesamtmasse des Nutzfahrzeuges mit der Wechselbrücke nach dem Hochfahren des Fahrwerks (40) oder des Verbleibens auf dem vorgegebenen Fahrwerk-Niveau (138) erfolgt.

15. Verfahren nach einem der vorherigen Ansprüche, **dadurch gekennzeichnet, dass** zum Erfassen eines Melde-Ereignisses (M) eines Ankuppelvorgangs (Mb) eines Sattelaufliegers (3b) oder Deichselanhängers (3c), der ein eigenes Anhänger-Bremssystem (TEBS) aufweist, folgende Schritte vorgesehen sind:
Ermitteln des Herstellens einer Datenverbindung (26) zwischen einem elektronischen Bremssystem (EBS) des Nutzfahrzeugs (2) und einem Anhänger-EBS (TEBS) des Anhängerfahrzeugs (3b, 3c) (St6-1),
Ermitteln des Anschlusses einer pneumatischen Anhänger-Bremsleitung (128) an eine Bremsleitungs-Kupplung (28) des Nutzfahrzeugs (2), und Anschluss einer pneumatischen Anhänger-Vorratsleitung (127) an eine pneumatische Zugfahrzeug-Vorratsleitungs-Kupplung (27) des Nutzfahrzeugs (2) (St6-2), insbesondere durch Ermittlung von Druck-Mess-Signalen (S55) im Nutzfahrzeug (2) und/oder Anhänger (3b, 3c) und/oder Anhänger-Fahrzeug (St6-2), nachfolgendes Lösen einer Feststellbremse (142) des Nutzfahrzeugs (2) und/oder Ermitteln einer Fahrt des Nutzfahrzeugs (2) durch Auswertung von Raddrehzahlsignalen (n) (St6-3),
wobei nachfolgend der Aufnahmevorgang (Mb) gemeldet wird, insbesondere als Melde -Botschaft (TM) zur nachfolgenden Bildung des Positions-Meldesignals (PS) mit den aktuellen Positionsdaten (Pi (St6-4).

16. Verfahren nach einem der vorherigen Ansprüche, **dadurch gekennzeichnet, dass** das Ermitteln eines Abladevorgangs eines Anhängerfahrzeugs, insbesondere Sattelaufliegers (3b) oder Deichselanhängers (3c), durch folgende Schritte ermittelt wird:
Ermitteln des Einlegens einer Feststellbremse (142) des Anhängers (3),
insbesondere über ein Feststellbrems-Signal (St7-1),
nachfolgendes Ermitteln des Abkoppelns einer pneumatischen Anhänger-Bremsleitung (128) von einer Bremsleitungs-Kupplung (28) des Nutzfahrzeugs (2) und Abkoppeln einer pneumatischen Anhänger-Vorratsleitung (127) von einer pneumatische Zugfahrzeug-Vorratsleitungs-Kupplung (27) des Nutzfahrzeugs (2),
und/oder Ermitteln einer Unterbrechung einer Datenverbindung (26) zwischen einem Zugfahrzeug-EBS (EBS) und dem Anhänger-EBS (TEBS) (St7-2) wobei nachfolgend der Abladevorgang (Mb) gemeldet wird, insbesondere als Melde -Botschaft (TM) zur nachfolgenden Bildung des Positions-Meldesignals (PS) mit den aktuellen Positionsdaten (Pi) (St7-3)

17. Verfahren nach einem der vorherigen Ansprüche, **dadurch gekennzeichnet, dass** es räumlich auch zusätzlich über das Erfassungsgebiet (1) hinaus durchgeführt wird und von den mehreren Nutzfahrzeugen (2) als Melde-Ereignisse (M) Aufnahme-Vorgänge (Mb) und Ablade-Vorgänge (Ma) der mehreren mobilen, austauschbaren Ladungsträgern (3) ermittelt werden, die Positionsdaten (Pi) zur Kennzeichnung der Position in einem Globalen Navigations Satelitten System (GNSS) ermittelt werden, die Positions-Meldesignale (PS) gebildet und über ein drahtloses Netzwerk, insbesondere Mobilfunknetz, an die Kommunikations-Zentrale (8) übermittelt werden,
wobei in der Kommunikations-Zentrale (8) aus den empfangenen Positions-Meldesignalen (PS) die aktuellen Positionsdaten (Pi) des mindestens einen Ladungsträgers (3) ermittelt und in dem Datenspeicher (50) gespeichert und fortlaufend aktualisiert werden.

18. Verfahren nach einem der vorherigen Ansprüche, **dadurch gekennzeichnet, dass** in dem Fall, das keine drahtlose Verbindung zur Kommunikations-Zentrale (8) erstellbar ist, die Positionsdaten (Pi) aufgezeichnet und gespeichert werden und nach Erstellen einer drahtlosen Verbindung die gespeicherten Positionsdaten (Pi) an die Kommunikations-Zentrale (8) übertragen werden.

19. Flottenmanagementsystem (60) für ein abgegrenztes Erfassungsgebiet (1), insbesondere einen Betriebshof, zur Durchführung eines Verfahrens nach einem der vorherigen Ansprüche,
wobei das Flottenmanagementsystem (60) aufweist:
eine Verbindung zu einem oder mehreren Nutzfahrzeugen (21; 2a, 2b, 2c, 2d), mehrere durch die Nutzfahrzeuge (2) in dem abgegrenzten Erfassungsgebiet (1) verfahrbare Ladungsträger (3; 3a, 3b, 3c, 3d),
eine Kommunikations-Zentrale (8) mit einer Sende-Empfangs-Einheit (10) für ein Betriebshof-Netzwerk (12) zur Kommunikation mit den Nutzfahrzeugen (2; 21; 2a, 2b, 2c, 2d) und mit einem Datenspeicher (50) zur Speicherung aktueller Positionsdaten (Pi) der Ladungsträger (3).

## Claims

1. Method for detecting the position of at least one mobile, exchangeable load carrier (3; 3a, 3b, 3c, 3d), which can be transported by a commercial vehicle (2), in a demarcated detection zone (1) in which the at least one mobile, exchangeable load carrier (3) is moved by the at least one commercial vehicle (2),
wherein the at least one commercial vehicle (2) determines mounting processes (Mb) and/or offloading processes (Ma) of the at least one mobile, exchangeable load carrier (3) in the detection zone (1) as reporting events (M),
the at least one commercial vehicle (2) determines position data (Pi) for marking the position in the detection zone (1) for the reporting events (M), and
the at least one commercial vehicle (2) forms position reporting signals (PS) from the determined reporting events (M) on the one hand and from the position data (Pi) on the other hand and transmits them to a communication center (8) via a wireless network (12),
wherein, in the communication center (8), the current position data (Pi) of the at least one load carrier (3) are determined from the received position reporting signals (PS) and are stored and continuously updated in a data storage device (50), **characterized in that**
an offloading process (Ma) or mounting process of the load carrier (3) is determined by recording measurement signals (S55) from a pneumatic air suspension device (25) of the commercial vehicle (2), which is designed as an ECAS system (23) of the commercial vehicle (2),
determining from the measurement signals (S55) whether there is a change in the stroke height (Δh) of the air suspension device (25) over time and/or a change in the air pressure (Δp) in the air suspension device (25) of the commercial vehicle (2), and
if a change in stroke height (Δh) over time and/or a change in air pressure (Δp) of the air suspension device (25) is determined, deciding whether this is to be evaluated as an offloading process (Ma) or a mounting process (Mb) and, if an offloading process (Ma) or mounting process (Mb) is determined, subsequently forming the reporting message (TM), wherein
the determination as to whether there is a change in stroke height (Δh) over time is made by comparing the measurement signals (S55) with pre-stored data and evaluating a difference between the measurement signals (S55) and the pre-stored data.

2. Method according to claim 1, **characterized in that** the at least one mobile, exchangeable load carrier (3) is selected from the following groups:
swap bodies (3a) for mounting on the commercial vehicle (2),
semi-trailers (3b) for mounting on a commercial vehicle (2) designed as a semi-trailer truck (2b),
drawbar trailers (3c) and turntable drawbar trailers for attachment to a commercial vehicle (2) designed as a drawbar towing vehicle (2c),
containers (3d, 3e), in particular ISO containers (3e), or overseas containers (3e) or debris containers (3d), for mounting on a container vehicle (2d, 2e) as a commercial vehicle (2).

3. Method according to either of the preceding claims, **characterized in that** the mounting processes (Mb) and offloading processes (Ma) are predetermined, defined mounting processes (Mb) and offloading processes (Ma) that take place by means of technical coupling means (27, 28, 127, 128).

4. Method according to any of the preceding claims, **characterized in that** a plurality of load carriers (3) and a plurality of commercial vehicles (2) are provided in the detection zone (1).

5. Method according to any of the preceding claims, **characterized in that** the detection zone (1) is selected from the group which contains:
a depot (1), with an outer demarcation (1a) and one or more access roads (1b) for the commercial vehicles (2),
a rest stop,
a construction site,
a port area.

6. Method according to any of the preceding claims, **characterized in that** the mobile, exchangeable load carriers (3) are, by means of the commercial vehicles (2),
- delivered to the detection zone (1) and/or
- temporarily parked there, and/or
- moved on the demarcated zone (1) and/or
- transported out of the detection zone (1) by the commercial vehicles (2).

7. Method according to any of the preceding claims, **characterized in that** the wireless network (12) is a depot WLAN (12) for protocol-based, non-open data transmission, in particular for only the mobile, exchangeable load carriers (3) and the commercial vehicles (2).

8. Method according to any of the preceding claims, **characterized in that,** to determine the reporting event (M; Ma, Mb), it is first determined from vehicle-internal data (v2, n), in particular driving dynamics data (v2, n), whether the commercial vehicle (2) is stationary (65, v=0) (St1) and, if it is stationary (65, v=0), it is determined from temporally successive measurement signals (S55) whether the reporting event (M) is an offloading process (MA) or a mounting process (MB) (St3, St4),
upon detection of a reporting event (M), a reporting message (TM) is formed by an EBS control unit (20) of an electronic braking system (EBS) of the commercial vehicle (2) and is output via a vehicle-internal data bus (CAN) to a telematics control unit (22) of the commercial vehicle (2) (St5),
the current position data (Pi) are subsequently determined by the telematics control unit (22), in particular via a global position-determination system (GNSS) (St6),
the position reporting signal (PS) is subsequently formed from the position data (Pi) and the reporting event (M; MA, MB) and sent via the wireless network (12) to the communication center (8) (St7).

9. Method according to any of the preceding claims, **characterized in that** the load carrier (3) is designed as a swap body (3a) or a transport container (3d).

10. Method according to claim 1, **characterized in that** the determination as to whether a change in stroke height (Δh) over time is present is made by comparing the measurement signals (S55) with pre-stored data from tables or characteristic curves, and evaluating a difference between the measurement signals (S55) and the pre-stored data by means of threshold values.

11. Method according to any of the preceding claims, **characterized in that** a mounting process (Mb) of a swap body (3a) is determined by the following steps:
determining an actual mass (m) of the load from a pneumatic air suspension system (55) (St4-1),
lowering or letting down a chassis (40) of the commercial vehicle (2), by detecting a control signal (134) to lower the chassis and/or detecting a level lowering (St4-2),
determining an engagement process of a reverse gear (136) from a gearshift signal (137) or determining a reverse movement from wheel speed signals (n) (St4-3),
determining if the chassis (40) has been raised or has remained at the specified chassis level (138) over a measurement period (Δt), from level adjustment control signals (139) or level height measurement signals (St4-4),
subsequently determining that a forward gear (135) is engaged from a gear shift signal (137) and/or a forward movement from a wheel speed signal (St4-5),
subsequently determining a mass (m) of the load (140) or of the commercial vehicle (1) with load (140) which is higher than the initially determined mass (m) of the load (140) or of the commercial vehicle (1) without load (St4-6), the mounting process (Mb) being subsequently reported, in particular as a reporting message (TM) for the subsequent formation of the position reporting signal (PS) with current position data (Pi).

12. Method according to claim 11, **characterized in that** the current position data (Pi) are determined during or after the mounting process and/or when generating a gear shift signal (137) and/or when engaging a forward gear (135) or reverse gear (136).

13. Method according to any of the preceding claims, **characterized in that** an offloading process (Mb) of a swap body (3a) is determined by the following steps:
determining an actual mass (m) of the load (140) from a pneumatic air suspension system (55) (St5-1),
lowering or letting down a chassis (40) of the commercial vehicle (2), by detecting a control signal (134) to lower the chassis and/or detecting a level lowering (St5-2),
determining an engagement process of a forward gear (135) from a gearshift signal (137) or determining a forward movement from wheel speed signals (n) (St5-3),
determining if the chassis (40) has been raised or has remained at the specified chassis level (138) over a measurement period (Δt), from level adjustment control signals (139) or level height measurement signals (St5- 4),
subsequently determining that a forward gear (135) is engaged from a gear shift signal (137) and/or a forward movement from a wheel speed signal (n) (St5-5),
determining a mass (m) of the load (140) which is lower than the initially determined mass (m) of the load (140) (St5-6),
the offloading process (Mb) being subsequently reported, in particular as a reporting message (TM) for the subsequent formation of the position reporting signal (PS) with current position data (Pi).

14. Method according to claim 13, **characterized in that** the total mass of the commercial vehicle together with the swap body is determined after the chassis (40) has been raised or has remained at the specified chassis level (138).

15. Method according to any of the preceding claims, **characterized in that,** to detect a reporting event (M) of a coupling process (Mb) of a semi-trailer (3b) or drawbar trailer (3c) which has its own trailer braking system (TEBS), the following steps are provided: determining the establishment of a data connection (26) between an electronic braking system (EBS) of the commercial vehicle (2) and a trailer EBS (TEBS) of the trailer vehicle (3b, 3c) (St6-1),
determining the connection of a pneumatic trailer brake line (128) to a brake line coupling (28) of the commercial vehicle (2), and connecting a pneumatic trailer supply line (127) to a pneumatic towing vehicle supply line coupling (27) of the commercial vehicle (2) (St6-2), in particular by determining pressure measurement signals (S55) in the commercial vehicle (2) and/or trailer (3b, 3c) and/or trailer vehicle (St6-2), subsequently releasing a parking brake (142) of the commercial vehicle (2) and/or determining a movement of the commercial vehicle (2) by evaluating wheel speed signals (n) (St6-3),
the mounting process (Mb) being subsequently reported, in particular as a reporting message (TM) for the subsequent formation of the position reporting signal (PS) with the current position data (Pi (St6-4).

16. Method according to any of the preceding claims, **characterized in that** an offloading process of a trailer vehicle, in particular a semi-trailer (3b) or drawbar trailer (3c), is determined by the following steps:
determining the engagement of a parking brake (142) of the trailer (3), in particular by means of a parking brake signal (St7-1),
subsequently determining the decoupling of a pneumatic trailer brake line (128) from a brake line coupling (28) of the commercial vehicle (2) and decoupling a pneumatic trailer supply line (127) from a pneumatic towing vehicle supply line coupling (27) of the commercial vehicle (2),
and/or determining an interruption of a data connection (26) between a towing vehicle EBS (EBS) and the trailer EBS (TEBS) (St7-2), the offloading process (Mb) being subsequently reported, in particular as a reporting message (TM) for the subsequent formation of the position reporting signal (PS) with the current position data (Pi) (St7-3).

17. Method according to any of the preceding claims, **characterized in that** it is also carried out spatially beyond the detection zone (1) and the plurality of commercial vehicles (2) determine mounting processes (Mb) and offloading processes (Ma) of the plurality of mobile, exchangeable load carriers (3) as reporting events (M), they determine the position data (Pi) for marking the position in a Global Navigation Satellite System (GNSS), and they form the position reporting signals (PS) and transmit them to the communication center (8) via a wireless network, in particular a mobile network,
wherein, in the communication center (8), the current position data (Pi) of the at least one load carrier (3) are determined from the received position reporting signals (PS) and are stored and continuously updated in the data storage device (50).

18. Method according to any of the preceding claims, **characterized in that** if no wireless connection to the communication center (8) can be created, the position data (Pi) are recorded and stored, and, after a wireless connection is created, the stored position data (Pi) are transmitted to the communication center (8).

19. Fleet management system (60) for a demarcated detection zone (1), in particular a depot, for carrying out a method according to any of the preceding claims,
wherein the fleet management system (60) comprises:
a connection to one or more commercial vehicles (21; 2a, 2b, 2c, 2d), a plurality of load carriers (3; 3a, 3b, 3c, 3d) that can be transported by the commercial vehicles (2) in the demarcated detection zone (1),
a communication center (8) having a transceiver unit (10) for a depot network (12) for communicating with the commercial vehicles (2; 21; 2a, 2b, 2c, 2d) and having a data storage device (50) for storing current position data (Pi) of the load carriers (3).

## Revendications

1. Procédé pour la détection de position d'au moins un support de chargement mobile interchangeable (3 ; 3a, 3b, 3c, 3d) et déplaçable par un véhicule utilitaire (2) dans une zone de détection (1) délimitée dans laquelle l'au moins un support de chargement mobile interchangeable (3) est déplacé par l'au moins un véhicule utilitaire (2),
dans lequel des opérations de réception (Mb) et/ou des opérations de déchargement (Ma) de l'au moins un support de chargement mobile interchangeable (3) sont déterminées comme évènements de signalisation (M) par l'au moins un véhicule utilitaire (2) dans la zone de détection (1),
des données de position (Pi) sont déterminées par l'au moins un véhicule utilitaire (2) pour les évènements de signalisation (M) pour la caractérisation de la position dans la zone de détection (1), et
des signaux de signalisation de position (PS) sont formés par l'au moins un véhicule utilitaire (2) à partir, d'une part, des évènements de signalisation (M) déterminés et, d'autre part, des données de position (Pi), et sont transmis à une centrale de communication (8) par l'intermédiaire d'un réseau sans fil (12),
dans lequel les données de position (Pi) actuelles de l'au moins un support de chargement (3) sont déterminées dans la centrale de communication (8) à partir des signaux de signalisation de position (PS) reçus et sont mémorisées dans une mémoire de données (50) et actualisées en continu, **caractérisé en ce que**
une opération de déchargement (Ma) ou une opération de réception du support de chargement (3) est déterminée par la réception de signaux de mesure (S55) d'un dispositif à coussin d'air (25) pneumatique du véhicule utilitaire (2), lequel dispositif à coussin d'air est réalisé sous forme de système ECAS (23) du véhicule utilitaire (2),
le fait de déterminer, à partir des signaux de mesure (S55), si une modification de hauteur de levage (Δh) du dispositif à coussin d'air (25) et/ou une modification de pression d'air (Δp) dans le dispositif à coussin d'air (25) temporelles du véhicule utilitaire (2) existent, et
lors de la détermination d'une modification de hauteur de levage (Δh) et/ou d'une modification de pression d'air (Δp) temporelles du dispositif à coussin d'air (25), le fait de décider si celles-ci doivent être évaluées comme opérations de déchargement (Ma) ou opérations de réception (Mb) et, lors de la détermination d'une opération de déchargement (Ma) ou d'une opération de réception (Mb), la formation ultérieure du message de signalisation (TM), dans lequel
le fait de déterminer si une modification de hauteur de levage (Δh) temporelle existe est effectué au moyen d'une comparaison des signaux de mesure (S55) avec des données prémémorisées et d'une évaluation d'une différence des signaux de mesure (S55) avec les données prémémorisées.

2. Procédé selon la revendication 1, **caractérisé en ce que** l'au moins un support de chargement mobile interchangeable (3) est choisi dans les groupes suivants :
caisses mobiles (3a) destinées à être reçues sur le véhicule utilitaire (2),
semi-remorque (3b) destinée à être reçue sur un véhicule utilitaire (2) réalisé sous forme de semi-remorque (2b),
remorque à timon (3c) et remorque à timon pivotant permettant le remorquage à un véhicule utilitaire (2) réalisé sous forme de véhicule tracteur à timon (2c),
conteneur (3d, 3e), en particulier conteneur ISO (3e), ou conteneur maritime (3e) ou conteneur à gravats (3d), destiné à être reçu par un véhicule porte-conteneurs (2d, 2e) en tant que véhicule utilitaire (2).

3. Procédé selon l'une des revendications précédentes,
**caractérisé en ce que** les opérations de réception (Mb) et les opérations de déchargement (Ma) sont des opérations de réception (Mb) et des opérations de déchargement (Ma) prédéterminées, définies et effectuées au moyen de moyens d'accouplement (27, 28, 127, 128) techniques.

4. Procédé selon l'une des revendications précédentes,
**caractérisé en ce que** plusieurs supports de chargement (3) et plusieurs véhicules utilitaires (2) sont prévus dans la zone de détection (1).

5. Procédé selon l'une des revendications précédentes, **caractérisé en ce que** la zone de détection (1) est choisie dans le groupe contenant :
un dépôt (1), comportant une délimitation extérieure (1a) et une ou plusieurs voies d'accès (1b) pour les véhicules utilitaires (2),
une aire de repos,
un chantier,
une zone portuaire.

6. Procédé selon l'une des revendications précédentes,
**caractérisé en ce que** les supports de chargement mobiles interchangeables (3) sont, par les véhicules utilitaires (2),
- livrés dans la zone de détection (1), et/ou
- stationnés temporairement, et/ou
- déplacés sur la zone délimitée (1), et/ou
- évacués de la zone de détection (1) par les véhicules utilitaires (2).

7. Procédé selon l'une des revendications précédentes,
**caractérisé en ce que** le réseau sans fil (12) est un réseau WLAN de dépôt (12) pour la transmission de données non ouverte, basée sur des protocoles, en particulier uniquement pour les supports de chargement mobiles interchangeables (3) et les véhicules utilitaires (2).

8. Procédé selon l'une des revendications précédentes,
**caractérisé en ce que**, pour la détermination de l'évènement de signalisation (M ; Ma, Mb), on détermine d'abord à partir de données internes au véhicule (v2, n), en particulier de données de dynamique de conduite (v2, n), si un arrêt (65, v = 0) du véhicule utilitaire (2) existe (St1) et, en cas d'existence d'un arrêt (65, v = 0), on détermine à partir de signaux de mesure (S55) qui se succèdent temporellement si une opération de déchargement (MA) ou une opération de réception (MB) existe (St3, St4) comme évènement de signalisation (M),
lors de la détection d'un évènement de signalisation (M), un message de signalisation (TM) est formé par un dispositif de commande EBS (20) d'un système de freinage électronique (EBS) du véhicule utilitaire (2) et est émis (St5) par l'intermédiaire d'un bus de données (CAN) interne au véhicule vers un dispositif de commande télématique (22) du véhicule utilitaire (2),
ensuite, les données de position (Pi) actuelles sont déterminées par le dispositif de commande télématique (22), en particulier par l'intermédiaire d'un système de détermination de position global (GNSS) (St6),
ensuite, à partir des données de position (Pi) et de l'évènement de signalisation (M ; MA, MB), le signal de signalisation de position (PS) est formé et envoyé (St7) à la centrale de communication (8) par l'intermédiaire du réseau sans fil (12).

9. Procédé selon l'une des revendications précédentes,
**caractérisé en ce que** le support de chargement (3) est réalisé sous forme de caisse mobile (3a) ou de conteneur de transport (3d).

10. Procédé selon la revendication 1, **caractérisé en ce que** le fait de déterminer si une modification de hauteur de levage (Δh) temporelle existe est effectué au moyen d'une comparaison des signaux de mesure (S55) avec des données prémémorisées provenant de tableaux ou de courbes caractéristiques, et d'une évaluation d'une différence des signaux de mesure (S55) avec les données prémémorisées au moyen de valeurs seuil.

11. Procédé selon l'une des revendications précédentes,
**caractérisé en ce qu'**une opération de réception (Mb) d'une caisse mobile (3a) est déterminée par les étapes suivantes :
détermination d'une masse (m) réelle du chargement à partir d'un système à coussin d'air (55) pneumatique (St4-1),
abaissement ou évacuation d'un châssis (40) du véhicule utilitaire (2), par la détection d'un signal de commande (134) pour l'évacuation de châssis et/ou la détection d'un abaissement de niveau (St4-2),
détermination d'une opération d'engagement d'une marche arrière (136) à partir d'un signal de changement de vitesse (137) ou détermination d'une marche arrière à partir de signaux de vitesse de rotation de roue (n) (St4-3),
détermination d'une montée du châssis (40) ou d'un maintien au niveau de châssis (138) prédéterminé sur une période de mesure (Δt) à partir de signaux de commande de réglage de niveau (139) ou de signaux de mesure de hauteur de niveau (St4-4),
détermination ultérieure qu'une marche avant (135) est engagée à partir d'un signal de changement de vitesse (137) et/ou d'une conduite en avant à partir d'un signal de vitesse de rotation de roue (St4-5),
détermination ultérieure d'une masse (m) du chargement (140) ou du véhicule utilitaire (1) avec chargement (140) qui est supérieure à la masse (m) initialement déterminée du chargement (140) ou du véhicule utilitaire (1) sans chargement (St4-6), dans lequel l'opération de réception (Mb) est ensuite signalée, en particulier sous forme de message de signalisation (TM) pour la formation ultérieure du signal de signalisation de position (PS) avec des données de position (Pi) actuelles.

12. Procédé selon la revendication 11, **caractérisé en ce que** les données de position (Pi) actuelles sont déterminées pendant ou après l'opération de réception et/ou lors de la génération d'un signal de changement de vitesse (137) et/ou lors de l'engagement d'une marche avant (135) ou d'une marche arrière (136).

13. Procédé selon l'une des revendications précédentes, **caractérisé en ce qu'**une opération de déchargement (Mb) d'une caisse mobile (3a) est déterminée par les étapes suivantes :
détermination d'une masse (m) réelle du chargement (140) à partir d'un système à coussin d'air (55) pneumatique (St5-1),
abaissement ou évacuation d'un châssis (40) du véhicule utilitaire (2), par la détection d'un signal de commande (134) pour l'évacuation de châssis et/ou la détection d'un abaissement de niveau (St5-2),
détermination d'une opération d'engagement d'une marche avant (135) à partir d'un signal de changement de vitesse (137) ou détermination d'une marche avant à partir de signaux de vitesse de rotation de roue (n) (St5-3),
détermination d'une montée du châssis (40) ou d'un maintien au niveau de châssis (138) prédéterminé sur une période de mesure (Δt) à partir de signaux de commande de réglage de niveau (139) ou de signaux de mesure de hauteur de niveau (St5-4),
détermination ultérieure qu'une marche avant (135) est engagée à partir d'un signal de changement de vitesse (137) et/ou d'une conduite en avant à partir d'un signal de vitesse de rotation de roue (n) (St5-5),
détermination d'une masse (m) du chargement (140) qui est inférieure à la masse (m) initialement déterminée du chargement (140) (St5-6), dans lequel l'opération de déchargement (Mb) est ensuite signalée, en particulier sous forme de message de signalisation (TM) pour la formation ultérieure du signal de signalisation de position (PS) avec des données de position (Pi) actuelles.

14. Procédé selon la revendication 13, **caractérisé en ce que** la détermination de la masse totale du véhicule utilitaire comportant la caisse mobile est effectuée après que le châssis (40) a été monté ou est resté au niveau de châssis (138) prédéterminé.

15. Procédé selon l'une des revendications précédentes, **caractérisé en ce que,** pour la détection d'un évènement de signalisation (M) d'une opération d'attelage (Mb) d'une semi-remorque (3b) ou d'une remorque à timon (3c) qui présente un système de freinage de remorque (TEBS) propre, les étapes suivantes sont prévues :
détermination de l'établissement d'une connexion de données (26) entre un système de freinage électronique (EBS) du véhicule utilitaire (2) et un système EBS de remorque (TEBS) du véhicule remorqué (3b, 3c) (St6-1),
détermination du raccordement d'une conduite de freinage de remorque (128) pneumatique à un accouplement de conduite de freinage (28) du véhicule utilitaire (2), et raccordement d'une conduite de réserve de remorque (127) pneumatique à un accouplement de conduite de réserve de véhicule tracteur (27) pneumatique du véhicule utilitaire (2) (St6-2), en particulier en déterminant des signaux de mesure de pression (S55) dans le véhicule utilitaire (2) et/ou la remorque (3b, 3c) et/ou le véhicule remorqué (St6-2), desserrage ultérieur d'un frein de stationnement (142) du véhicule utilitaire (2) et/ou détermination d'un déplacement du véhicule utilitaire (2) en évaluant des signaux de vitesse de rotation de roue (n) (St6-3),
dans lequel l'opération de réception (Mb) est ensuite signalée, en particulier sous forme de message de signalisation (TM) pour la formation ultérieure du signal de signalisation de position (PS) avec les données de position (Pi) actuelles (St6-4).

16. Procédé selon l'une des revendications précédentes,
**caractérisé en ce que** la détermination d'une opération de déchargement d'un véhicule remorqué, en particulier d'une semi-remorque (3b) ou d'une remorque à timon (3c), est déterminée par les étapes suivantes :
détermination de l'engagement d'un frein de stationnement (142) de la remorque (3), en particulier par l'intermédiaire d'un signal de frein de stationnement (St7-1),
détermination ultérieure d'un désaccouplement d'une conduite de freinage de remorque (128) pneumatique d'un accouplement de conduite de freinage (28) du véhicule utilitaire (2) et le désaccouplement d'une conduite de réserve de remorque (127) pneumatique d'un accouplement de conduite de réserve de véhicule tracteur (27) pneumatique du véhicule utilitaire (2),
et/ou détermination d'une interruption d'une connexion de données (26) entre un système EBS de véhicule tracteur (EBS) et le système EBS de remorque (TEBS) (St7-2), dans lequel l'opération de déchargement (Mb) est ensuite signalée, en particulier comme message de signalisation (TM) pour la formation ultérieure du signal de signalisation de position (PS) avec les données de position (Pi) actuelles (St7-3).

17. Procédé selon l'une des revendications précédentes,
**caractérisé en ce qu'**il est en outre également mis en œuvre spatialement au-delà de la zone de détection (1), et des opérations de réception (Mb) et des opérations de déchargement (Ma) des supports de chargement mobiles interchangeables (3) sont détectées comme évènements de signalisation (M) par les véhicules utilitaires (2), les données de position (Pi) sont déterminées pour la caractérisation de la position dans une géolocalisation et navigation par un système de satellites (GNSS), les signaux de signalisation de position (PS) sont formés et transmis à la centrale de communication (8) par l'intermédiaire d'un réseau sans fil, en particulier un réseau de téléphonie mobile,
dans lequel les données de position (Pi) actuelles de l'au moins un support de chargement (3) sont déterminées dans la centrale de communication (8) à partir des signaux de signalisation de position (PS) reçus et sont mémorisées dans la mémoire de données (50) et actualisées en continu.

18. Procédé selon l'une des revendications précédentes, **caractérisé en ce que,** dans le cas où aucune connexion sans fil ne peut être établie avec la centrale de communication (8), les données de position (Pi) sont enregistrées et mémorisées et, après établissement d'une connexion sans fil, les données de position (Pi) mémorisées sont transmises à la centrale de communication (8).

19. Système de gestion de flotte (60) pour une zone de détection (1) délimitée, en particulier un dépôt, pour la mise en œuvre d'un procédé selon l'une des revendications précédentes,
dans lequel le système de gestion de flotte (60) présente :
une connexion avec un ou plusieurs véhicules utilitaires (21 ; 2a, 2b, 2c, 2d), plusieurs supports de chargement mobiles (3 ; 3a, 3b, 3c, 3d) déplaçables par les véhicules utilitaires (2) dans la zone de détection (1) délimitée,
une centrale de communication (8) comportant une unité d'émission-réception (10) pour un réseau de dépôt (12) pour la communication avec les véhicules utilitaires (2 ; 21 ; 2a, 2b, 2c, 2d) et comportant une mémoire de données (50) pour la mémorisation des données de position (Pi) actuelles des supports de chargement (3).
